# EUROPEAN PATENT APPLICATION

(11) **EP 4 451 597 A1**
(43) Date of publication of application: **23.10.2024**
(21) Application number: 22923632.8
(22) Date of filing: 28.12.2022
(51) Int. Cl.: H04L 5/00

(54) **METHOD, SYSTEM, AND DEVICE FOR COLLABORATIVELY SENDING SIGNALING PACKET**

(30) Priority: 30.01.2022 CN 202210114543
(71) Applicant: Huawei Technologies Co., Ltd., Shenzhen, Guangdong 518129 (CN)
(72) Inventor: CHEN, Yunman, Shenzhen, Guangdong 518129 (CN); DING, Minda, Shenzhen, Guangdong 518129 (CN); SI, Xiaoshu, Shenzhen, Guangdong 518129 (CN)
(74) Representative: MERH-IP Matias Erny Reichl Hoffmann Patentanwälte PartG mbB
(86) International application number: PCT/CN2022/142798
(87) International publication number: WO 2023/142847

(57) **Abstract**

This application relates to the field of communication technologies, and discloses a method, a system, and an apparatus for sending a signaling packet in a coordinated manner, to provide a solution in which a control node in wireless networking coordinates a plurality of network nodes to send signaling packets, to reduce unnecessary contention and collisions, and reduce a waste of an air interface resource. The method is: The control node sends a first indication message in a current periodicity, where the first indication message is used to coordinate a first network node and a second network node to send signaling packets, where the coordination uses any one of the following manners: simultaneous sending, sending at a time interval less than a specified value, or sending at a time interval greater than a time interval required by a signaling packet sent earlier.

## Description

This application claims priority to Chinese Patent Application No. 202210114543.0, filed with the China National Intellectual Property Administration on January 30, 2022 and entitled "METHOD, SYSTEM, AND APPARATUS FOR SENDING SIGNALING PACKET IN COORDINATED MANNER", which is incorporated herein by reference in its entirety.

### TECHNICAL FIELD

Embodiments of this application relate to the field of communication technologies, and in particular, to a method, a system, and an apparatus for sending a signaling packet in a coordinated manner.

### BACKGROUND

A conventional wireless networking manner is usually implemented by a single router. However, due to characteristics such as a high-frequency working feature and transmit power of the router, it is difficult to achieve strong signal coverage. When there is an obstacle, a wireless signal is weaker, especially for a large-sized residence.

To extend a wireless network, a plurality of access points (access points, APs) are connected in a wired or wireless manner to jointly provide a wireless network service. For example, one wireless networking manner is a networking mode with an access controller (AP controller, AC) and an AP, where the AC is responsible for managing all APs; and the other wireless networking manner is a wireless mesh (mesh) networking mode, where a plurality of nodes at a same level are connected to each other in the wired or wireless manner to form a plurality of paths.

However, as a requirement on the wireless network increases, a quantity of APs in wireless networking also increases, and each AP periodically or abruptly sends a signaling packet (for example, a management frame or a control frame). When there are a large quantity of network nodes in the wireless network, because each network node needs to contend for an air interface to send a signaling packet, problems of unnecessary contention and collisions may be caused.

### SUMMARY

Embodiments of this application provide a method, a system, and an apparatus for sending a signaling packet in a coordinated manner, to provide a solution in which a plurality of network nodes in wireless networking send signaling packets in the coordinated manner, to reduce unnecessary contention and collisions, and reduce a waste of an air interface resource.

According to a first aspect, an embodiment of this application provides a method for sending a signaling packet in a coordinated manner. The method includes: A control node sends a first indication message in a current periodicity, where the first indication message is used to coordinate a first network node and a second network node to send signaling packets, where the coordination uses any one of the following manners: simultaneous sending, sending at a time interval less than a specified value, or sending at a time interval greater than a time interval required by a signaling packet sent earlier.

In this method, through management and control of the control node in wireless networking, a plurality of network nodes may be coordinated to send signaling packets in order based on a management and control indication of the control node. In comparison with a manner, in a conventional technology, in which each network node needs to occupy an air interface resource in a contention manner to send a signaling packet each time, in this application, the control node may send a coordination indication of the signaling packets to the plurality of network nodes, to reduce unnecessary contention and collisions, and reduce a waste of the air interface resource.

In a possible design, the method further includes: When the control node receives signal strength that is of the second network node and that is sent by the first network node, or receives signal strength that is of the first network node and that is sent by the second network node, the control node determines that signal coverage areas of the first network node and the second network node overlap.

In this design, whether signal coverage areas between network nodes overlap is determined, so that the control node can more accurately determine, based on distribution of the signal coverage areas between the network nodes, a manner of coordinating the network nodes to send signaling packets. For example, if there is no overlapping signal coverage area between the first network node and the second network node, the control node may preferentially perform coordination that indicates to use a manner of simultaneous sending or sending at the time interval less than the specified value, to reduce occupation of an air interface resource. If there is an overlapping signal coverage area between the first network node and the second network node, the control node may preferentially perform coordination that indicates to use a manner of sending at the time interval greater than the time interval required by the signaling packet sent earlier. In this way, management and control of the control node can not only reduce unnecessary contention and collisions, but also reduce a waste of the air interface resource.

In a possible design, when the coordination is simultaneous sending or sending at the time interval less than the specified value, the method further includes: The control node determines transmit power parameters of the first network node and the second network node in a next periodicity. The control node includes the transmit power parameters in a first indication message sent in the next periodicity, where the transmit power parameters indicate transmit power used by the first network node and the second network node to send the signaling packets, and the transmit power used in the next periodicity is not completely the same as transmit power parameters respectively used in a plurality of periodicities before the next periodicity.

In this design, because signal coverage areas of network nodes overlap, there may be a problem that a terminal device cannot correctly obtain a signaling packet through parsing. Based on this, the control node may set, to change, power between two network nodes whose signal coverage areas overlap, so that an overlapping location can have a feature of a dynamic change. Therefore, the problem that when being located at the overlapping location, the terminal device cannot correctly obtain the signaling packet through parsing can be reduced.

In a possible design, the transmit power of the first network node is original power, and the transmit power of the second network node is changed power, where the changed power includes increased power or decreased power; the transmit power of the first network node is changed power, and the transmit power of the second network node is original power; or the transmit power of the first network node is original power, and the transmit power of the second network node is original power.

In this design, power between two network nodes whose signal coverage areas overlap is set to change, so that an overlapping location can have a feature of a dynamic change. Therefore, a problem that when being located at the overlapping location, a terminal device cannot correctly obtain a signaling packet through parsing can be reduced.

In a possible design, a manner of coordinating, in the current periodicity, the first network node and the second network node to send the signaling packets is not completely the same as manners respectively used in a plurality of periodicities before the current periodicity.

In this design, because signal coverage areas of network nodes overlap, there may be a problem that a terminal device cannot correctly obtain a signaling packet through parsing. Based on this, the control node may further control, to change, the manner of coordinating the first network node and the second network node to send the signaling packets, to reduce a probability that the terminal cannot correctly obtain the signaling packet through parsing.

In a possible design, the first indication message further includes a sending mode indication parameter, and the sending mode indication parameter indicates the first network node and the second network node to send the signaling packets, or send the signaling packets based on a channel contention mechanism. A corresponding sending mode used by the first network node and the second network node to send the signaling packets in the current periodicity is not completely the same as corresponding sending modes respectively used to send the signaling packets in the plurality of periodicities before the current periodicity.

In this design, the control node may further indicate, based on an actual situation of wireless networking, whether a network node needs to send a signaling packet based on the channel contention mechanism. For example, if in wireless networking, in the current periodicity, there are many collisions when the signaling packet is sent based on an indication of the control node in a manner of no longer performing channel contention, to reduce the collisions, the control node may indicate, in the next periodicity, the network node to send the signaling packet based on the indication and the channel contention mechanism. In this way, coordinated sending of the signaling packets may be flexibly adjusted for a plurality of scenarios that may exist in wireless networking, to reduce the unnecessary contention and collisions, and reduce occupation time of an air interface resource.

In a possible design, when a quantity of network nodes included in wireless networking is greater than or equal to a preset quantity threshold, after the control node receives the signal strength that is of the second network node and that is sent by the first network node, or receives the signal strength that is of the first network node and that is sent by the second network node, the method further includes: When the control node determines that the signal strength that is of the second network node and that is sent by the first network node is greater than or equal to a preset signal strength threshold, or determines that the signal strength that is of the first network node and that is sent by the second network node is greater than or equal to a preset signal strength threshold, the control node determines that the signal coverage areas of the first network node and the second network node overlap.

In this design, in a scenario in which wireless networking includes a large quantity of network nodes, many signal coverage areas of the network nodes usually overlap. Consequently, there is a large calculation amount for the control node. When the signal coverage areas of the network nodes overlap, and there is higher signal strength obtained by scanning from each other, usually, there is greater interference when signaling packets are sent. Therefore, in this design, the preset signal strength threshold is set to reduce the calculation amount for the control node.

In a possible design, the method further includes: The control node sends a second indication message to the first network node and the second network node, where the second indication message indicates the first network node and the second network node to send enhanced packets to a connected terminal device, and the second indication message includes one or a combination of the following information: a type of the enhanced packet, a quantity of enhanced packets, a sending time interval of the enhanced packet, or a sending rate of the enhanced packet, where the enhanced packet is used by the connected terminal device to enhance signal strength of the received signaling packet.

In this design, the control node may further indicate a network node to send an enhanced packet to a connected terminal, to avoid a problem that signal strength deteriorates after the terminal receives signaling packets sent by a plurality of network nodes.

In a possible design, the signaling packet is a broadcast signaling packet.

In this design, in wireless networking, after a network node sends the broadcast signaling packet to a terminal device in wireless networking in a centralized manner, to improve signal strength of the terminal device, the control node indicates the network node to send an enhanced packet to the connected terminal device, to enhance signal strength of the signaling packet that is of the connected network node and that is received by the terminal device.

In a possible design, if the control node sends the first indication message in a broadcast manner, the first indication message includes: an identifier of the first network node, sending time that is of the signaling packet of the first network node and that is determined by the control node based on the coordination, an identifier of the second network node, and sending time that is of the signaling packet of the second network node and that is determined by the control node based on the coordination. If the control node sends the first indication message in a unicast manner, a first indication message sent by the control node to the first network node includes: an identifier of the first network node and sending time that is of the signaling packet of the first network node and that is determined by the control node based on the coordination, and a first indication message sent by the control node to the second network node includes: an identifier of the second network node and sending time that is of the signaling packet of the second network node and that is determined by the control node based on the coordination.

In this design, the control node may send the first indication message to the network node in a plurality of manners (broadcast or unicast), so that a coordination indication requirement in more scenarios can be met. During specific implementation, a manner of sending the first indication message by the control node may be determined based on an actual scenario.

According to a second aspect, an embodiment of this application provides another method for sending a signaling packet in a coordinated manner. The method includes: A first network node receives a first indication message sent by a control node in a current periodicity, where the first indication message is used to coordinate the first network node and a second network node to send a signaling packet. The first network node sends the signaling packet based on the first indication message. The coordination uses any one of the following manners: simultaneous sending, sending at a time interval less than a specified value, or sending at a time interval greater than a time interval required by a signaling packet sent earlier.

In a possible design, the method further includes: The first network node obtains signal strength of the second network node through detection. The first network node sends the signal strength of the second network node to the control node, to enable the control node to determine that signal coverage areas of the first network node and the second network node overlap.

In a possible design, when the coordination is simultaneous sending or sending at the time interval less than the specified value, the method further includes: The first network node determines, from the first indication message, a carried transmit power parameter of the first network node, where the transmit power parameters indicate transmit power used by the first network node to send the signaling packets, and transmit power used in a next periodicity is not completely the same as transmit power parameters respectively used in a plurality of periodicities before the next periodicity. The first network node determines, based on the transmit power parameter, the transmit power used for sending the signaling packet.

In a possible design, that the first network node determines, based on the transmit power parameter, the transmit power used for sending the signaling packet includes: The first network node determines, based on the transmit power parameter, that the transmit power is original power or changed power, where the changed power includes increased power or decreased power.

In a possible design, the first indication message further includes a sending mode indication parameter, and the sending mode indication parameter indicates the first network node and the second network node to send the signaling packets, or send the signaling packets based on a channel contention mechanism. A corresponding sending mode used by the first network node and the second network node to send the signaling packets in the current periodicity is not completely the same as corresponding sending modes respectively used to send the signaling packets in a plurality of periodicities before the current periodicity.

In a possible design, the method further includes: The first network node receives a second indication message sent by the control node, where the second indication message includes one or a combination of the following information: a type of an enhanced packet, a quantity of enhanced packets, a sending time interval of the enhanced packet, or a sending rate of an enhanced packet, where the enhanced packet is used by a connected terminal device to enhance signal strength of the received signaling packet. The first network node sends, based on the second indication message, the enhanced packet to the connected terminal device.

In a possible design, that the first network node sends, based on the second indication message, the enhanced packet to the connected terminal device includes: The first network node detects the connected terminal and a sending status of the enhanced packet, and sends, based on the second indication message, the enhanced packet to a connected terminal that meets a preset detection condition, where the preset detection condition includes but is not limited to one or a combination of the following conditions:
(1) Traffic of the connected terminal is less than or equal to a preset traffic threshold.
(2) A quantity of sent enhanced packets in a current preset periodicity is less than or equal to a preset quantity threshold.
(3) The connected terminal is in a non-dormant state.
(4) The connected terminal has no energy-saving requirement.
(5) A quantity of queues for sending the enhanced packet is less than a queueable critical value.

In this design, after receiving the indication message that is of the enhanced message and that is sent by the control node, the network node may further send the enhanced packet based on an actual situation of the connected terminal device, so that factors such as the requirement of the terminal device for energy saving and the sending status of the enhanced packet may be considered, to ensure requirements in various scenarios.

In a possible design, the signaling packet is a broadcast signaling packet.

In a possible design, when the first indication message is a broadcast message, the first indication message includes: an identifier of the first network node, sending time that is of the signaling packet of the first network node and that is determined by the control node based on the coordination, an identifier of the second network node, and sending time that is of the signaling packet of the second network node and that is determined by the control node based on the coordination. When the first indication message is a unicast message, the first indication message includes: an identifier of the first network node and sending time that is of the signaling packet of the first network node and that is determined by the control node based on the coordination.

According to a third aspect, an embodiment of this application provides a coordinated system for sending a signaling packet in a coordinated manner, where the system includes a control node, a first network node, and a second network node. The control node may perform the method provided in any possible design of the first aspect. The first network node may perform the method provided in any possible design of the second aspect. For the method performed by the second network node, refer to, for example, the method performed by the first network node in any possible design of the second aspect.

According to a fourth aspect, an embodiment of this application provides an apparatus for sending a signaling packet in a coordinated manner, where the apparatus includes a transceiver unit and a processing unit. Functions performed by the transceiver unit and the processing unit may correspond to the steps of the control node in any possible design or implementation of the first aspect.

According to a fifth aspect, an embodiment of this application provides an apparatus for sending a signaling packet in a coordinated manner, where the apparatus includes a transceiver unit and a processing unit. Functions performed by the transceiver unit and the processing unit may correspond to the steps performed by the first network node in any possible design or implementation of the second aspect.

According to a sixth aspect, an embodiment of this application further provides a network device, where the network device includes one or more processors and a memory. The memory is coupled to the processor, and the memory stores computer program code, where the computer program code includes computer instructions. The processor executes the computer instructions in the memory, to perform the method provided in any possible design of the first aspect. Optionally, the network device may further include a display. The display is configured to display information to a user when triggered by the processor. Optionally, the network device further includes a communication interface, and the processor is coupled to the communication interface. The communication interface may be a transceiver or an input/output interface. When the network device is a chip included in a network device, the communication interface may be an input/output interface of the chip. Optionally, the transceiver may be a transceiver circuit, and the input/output interface may be an input/output circuit.

According to a seventh aspect, an embodiment of this application further provides a network device, where the network device includes one or more processors and a memory. The memory is coupled to the processor, and the memory stores computer program code, where the computer program code includes computer instructions. The processor executes the computer instructions in the memory, to perform the method provided in any possible design of the second aspect. Optionally, the network device may further include a display. The display is configured to display information to a user when triggered by the processor. Optionally, the network device further includes a communication interface, and the processor is coupled to the communication interface. The communication interface may be a transceiver or an input/output interface. When the network device is a chip included in a network device, the communication interface may be an input/output interface of the chip. Optionally, the transceiver may be a transceiver circuit, and the input/output interface may be an input/output circuit.

According to an eighth aspect, an embodiment of this application further provides a wireless networking system, including the network device provided in the fifth aspect and at least one network device provided in the sixth aspect.

According to a ninth aspect, an embodiment of this application further provides a computer-readable storage medium, where the computer-readable storage medium stores a computer program. When the computer program is executed by a computer, the method provided in any possible design of the first aspect is implemented, or the method provided in any possible design of the second aspect is implemented.

According to a tenth aspect, an embodiment of this application further provides a computer program product, where the computer program product includes computer program code. When the computer program code is run by a processor of a network device, the network device is enabled to perform the method in any possible design of the first aspect, or the network device is enabled to perform the method in any possible design of the second aspect.

According to an eleventh aspect, an embodiment of this application further provides a chip, configured to read and execute a software program stored in a memory, to implement the method in any possible design of the first aspect, or implement the method in any possible design of the second aspect. The memory may be connected to the chip, or the memory may be built in the chip.

For beneficial effects of any one of the second aspect to the eleventh aspect, specifically, refer to beneficial effects of the possible designs of the first aspect. Details are not described herein again.

### BRIEF DESCRIPTION OF DRAWINGS

FIG. 1 is a schematic diagram 1 of a scenario of a wireless local area network according to an embodiment of this application;
FIG. 2 is a schematic diagram 2 of a scenario of a wireless local area network according to an embodiment of this application;
FIG. 3 is a schematic diagram of a scenario in which a terminal device receives a signaling packet according to an embodiment of this application;
FIG. 4 is a schematic diagram 3 of a scenario of a wireless local area network according to an embodiment of this application;
FIG. 5 is a schematic interaction diagram 1 of a method for sending a signaling packet in a coordinated manner according to an embodiment of this application;
FIG. 6 is a schematic interaction diagram 2 of a method for sending a signaling packet in a coordinated manner according to an embodiment of this application;
FIG. 7 is a schematic diagram of a scenario of a network node group according to an embodiment of this application;
FIG. 8 is a schematic diagram of a scenario of coordination according to an embodiment of this application;
FIG. 9a is a schematic diagram 1 of a scenario of a sending mode according to an embodiment of this application;
FIG. 9b is a schematic diagram 2 of a scenario of a sending mode according to an embodiment of this application;
FIG. 10 is an example diagram of a first indication message according to an embodiment of this application;
FIG. 11 is an example diagram of a second indication message according to an embodiment of this application;
FIG. 12 is a schematic interaction diagram 3 of a method for sending a signaling packet in a coordinated manner according to an embodiment of this application;
FIG. 13 is a schematic flowchart of a method for sending a signaling packet in a coordinated manner according to an embodiment of this application;
FIG. 14 is a schematic diagram of a structure of an apparatus for sending a signaling packet in a coordinated manner according to an embodiment of this application;
FIG. 15 is a schematic diagram of a structure of another apparatus for sending a signaling packet in a coordinated manner according to an embodiment of this application; and
FIG. 16 is a schematic diagram of a structure of a chip according to an embodiment of this application.

### DESCRIPTION OF EMBODIMENTS

Technical solutions provided in embodiments of this application may be applied to the wireless communication field, for example, a wireless local area network (wireless local area network, WLAN) communication system that uses a wireless fidelity (wireless fidelity, Wi-Fi) technology.

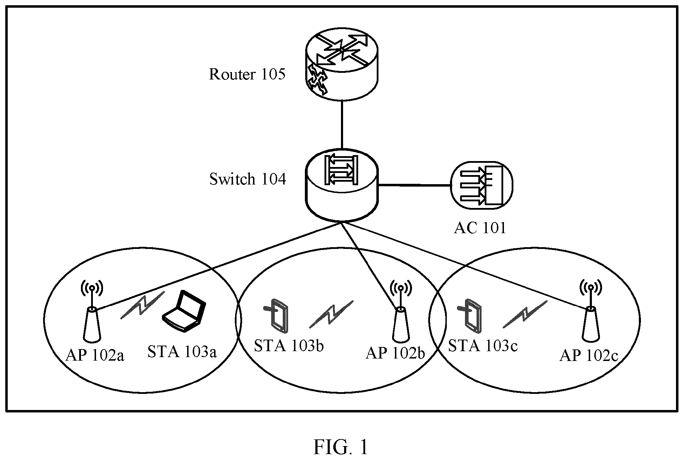

FIG. 1 is a schematic diagram of a scenario of a wireless local area network according to an embodiment of this application. In the wireless local area network, the wireless network may be extended mainly by using a wireless networking mode with an AC and an AP. The wireless local area network may include an AC 101, a plurality of APs (such as an AP 102a and an AP 102b shown in FIG. 1), and a plurality of stations (stations, STAs) (such as a STA 103a connected to the AP 102a, a STA 103b connected to the AP 102b, and a STA 103c connected to an AP 102c that are shown in FIG. 1) separately connected to the APs. In addition, the wireless local area network may further include a switch 104 (which may be, for example, a gateway switch) and a router 105, or may include another network node. A specific implementation of wireless networking is not limited in this application.

The AC is an access control device in the wireless local area network, is responsible for aggregating data from different APs and accessing a communication network, and completes control functions such as configuration management of an AP device, authentication and management of a wireless user, and broadband access and security. The AP is a wireless device that provides a wireless access service and data access, and allows access of another wireless device in a WLAN communication system. The STA is a wireless terminal device that accesses the AP, and includes, for example, a mobile phone (mobile phone), a tablet computer, a notebook computer, a palmtop computer, a mobile internet device (mobile internet device, MID), a virtual reality (virtual reality, VR) device, an augmented reality (augmented reality, AR) device, and a wireless terminal device in a smart home (smart home). The switch in the wireless local area network may implement packet exchange between the AC and the AP, and may implement network interconnection above a network layer. The router may be configured for interconnection and interworking between the wireless local area network, the Internet, and a wide area network, to transmit information.

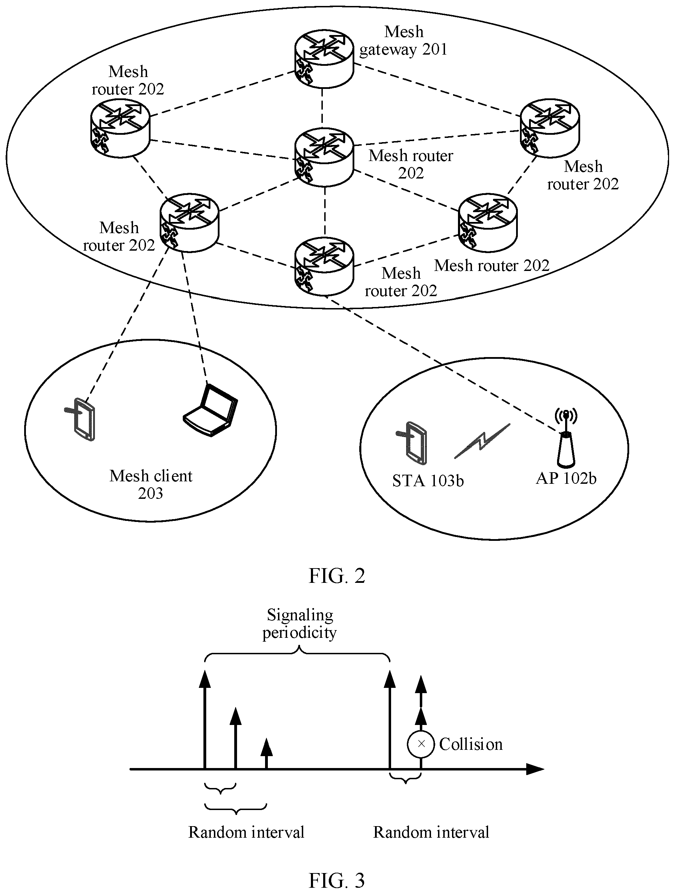

FIG. 2 is a schematic diagram of a scenario of another wireless local area network according to an embodiment of this application. In the wireless local area network, the wireless network may be extended mainly by using a wireless mesh (mesh) network, where the mesh network may also be referred to as a multi-hop network. The wireless local area network may include a mesh gateway 201, mesh routers 202, a mesh client 203 that accesses any one of the mesh routers 202, or a smaller wireless local area network (where for example, as shown in FIG. 2, an AP 102b is connected to one of the mesh routers 202). The mesh gateway 201 represents a router having a gateway/bridge function. The mesh routers 202 may be connected to each other, to form a plurality of transmission paths.

It should be noted that FIG. 1 and FIG. 2 show only optional implementations of wireless networking, and a specific implementation of wireless networking is not limited in this application.

With reference to content described in the background, in a Wi-Fi technology, a wireless device, for example, a STA or an AP, sends or receives a signal or data over an air interface by occupying an air interface resource. However, as a requirement on the wireless network increases, a quantity of APs in wireless networking also increases, and each AP periodically or abruptly sends a signaling packet (where the signaling packet may also be referred to as a "signaling frame", and the signaling frame may be, for example, a management frame or a control frame). When there are a large quantity of network nodes in the wireless network, because each network node needs to contend for an air interface to send a signaling packet, problems of unnecessary contention and collisions may be caused.

For example, FIG. 3 is a schematic diagram of a scenario in which a terminal device receives a signaling packet according to an embodiment of this application. In current wireless networking, before sending a signaling packet, an AP first monitors a status of an air interface. If the AP obtains, through detection, that the air interface is idle for a period of time, the AP performs random backoff. However, in a process in which the AP performs random backoff, two or more APs may have a same sending time point after performing random backoff. Consequently, a collision problem is caused. As shown in an example of the 2^{nd} signaling periodicity in FIG. 3, during signaling packet receiving, because the terminal device (which may also be referred to as a "terminal" in the following embodiments for short) simultaneously receives signaling packets sent by two APs, there is a collision problem that the signaling packets of the two APs cannot be correctly received.

In addition, in a wireless local area network, to determine that a STA can correctly receive a signaling packet, a low modulation and coding order is usually used. Therefore, when the signaling packet is sent, there is a problem that the air interface is occupied for long time. Further, when a quantity of APs in the wireless local area network is larger, in wireless networking, total time for occupying the air interface to send signaling packets is longer.

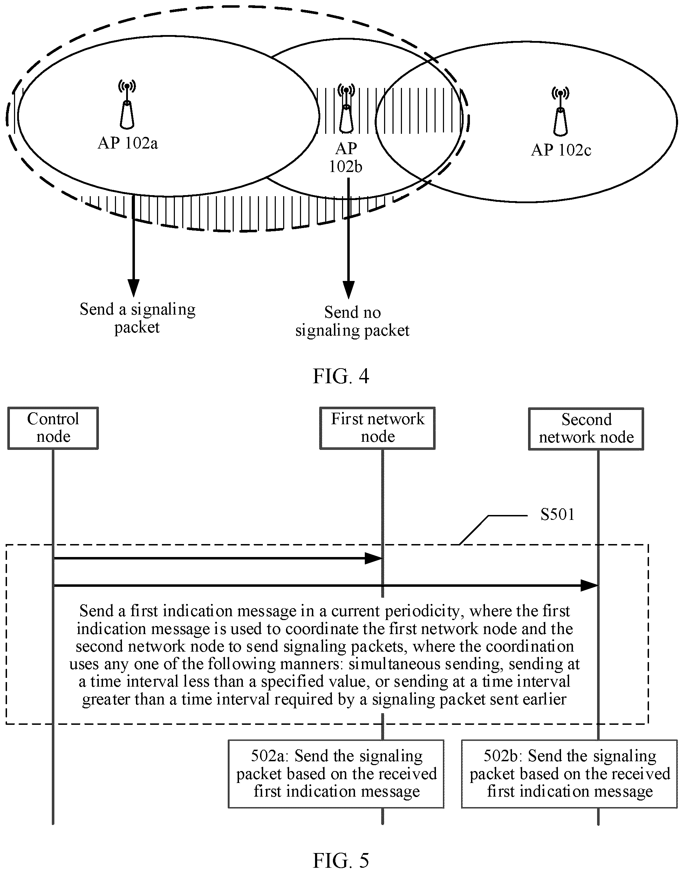

Currently, in the wireless local area network, in a conventional technology, there is a technical solution of properly planning AP deployment through network planning. In addition, in the wireless local area network set in the technical solution, sending of the signaling packet is managed and controlled. For example, FIG. 4 is a schematic diagram of a scenario of still another wireless local area network according to an embodiment of this application. In the wireless local area network, some APs in an area with good signal coverage are selected to send signaling packets, and another AP sends no signaling packet. For example, in an elliptic area with dashed lines in FIG. 4, an AP 102a sends a signaling packet, and an AP 102b sends no signaling packet. In this way, a total quantity of signaling packets sent in wireless networking can be reduced, so that total time for occupying an air interface can be reduced. However, in an actual situation, network planning is usually not performed in the wireless local area network. Therefore, the signaling packet cannot be well managed and controlled by using the related technical solution. In addition, if some APs send no signaling packet, there is a problem that signaling packet receiving is affected in a corresponding coverage area. For example, in the elliptic area in FIG. 4, an area other than a coverage area corresponding to the AP 102a may not receive the signaling packet.

In view of this, embodiments of this application provide a method for sending a signaling packet in a coordinated manner. A control node in wireless networking is used to implement coordinated control on each network node in wireless networking for sending a signaling packet, so that unnecessary contention and collisions can be reduced, and a waste of an air interface resource can be reduced. In addition, according to the method, a plurality of network nodes may simultaneously send signaling packets, so that occupation time of an air interface can be reduced.

The following describes in detail embodiments of this application with reference to the accompanying drawings.

FIG. 5 is a schematic interaction diagram of a method for sending a signaling packet in a coordinated manner according to an embodiment of this application. The method is applicable to wireless networking including a control node and a plurality of network nodes. The control node may be, for example, the AC in FIG. 1, or may be any mesh router in FIG. 2. The network node may be, for example, the AP in FIG. 1 (where for example, a first network node is the AP 102a in FIG. 1, and a second network node is the AP 102b in FIG. 1), or may be the mesh router in FIG. 2. It should be noted that specific types and quantities of control nodes and network nodes, and a specific form of wireless networking are not limited in this embodiment of this application. For ease of understanding, the following embodiments are described by using an example in which a wireless networking manner with the AC and the AP is used, the control node is the AC, and the network node is the AP.

**S501: The control node sends a first indication message in a current periodicity (which may also be referred to as a "signaling periodicity" in this embodiment of this application), where the first indication message is used to coordinate the first network node and the second network node to send signaling packets.** For example, the control node may implement, based on at least one of information such as default configuration of the control node (where for example, it is configured, by default, that the first network node and the second network node are coordinated in a coordinated manner, and the first network node and a third network node are coordinated in another coordinated manner), a busy status of an air interface (where for example, if the air interface is busy, a plurality of network nodes may be preferentially coordinated to use a simultaneous sending manner; or conversely, if the air interface is idle, network nodes may be preferentially coordinated to use a sequential sending manner), distribution of the network nodes in wireless networking, and signal strength of the network nodes, coordination indication on the network nodes for sending signaling packets. This is not specifically limited in this application. It should be noted that, in this embodiment of this application, the first network node and the second network node are used as an example to describe the method, provided in this application, for sending the signaling packet in the coordinated manner. When there are more network nodes in wireless networking, for a manner of coordinating other network nodes, refer to the manner used to coordinate the first network node and the second network node. Details are not described in this application again.

The coordination may use any one of the following manners:
Manner 1: Simultaneous sending. For example, in a scenario in which the network node in wireless networking has a high-precision clock synchronization feature, the control node may indicate sending moments of the first network node and the second network node. For example, the AC indicates the AP 102a to send the signaling packet at 08:00, and may further indicate to periodically send the signaling packet at an interval of five minutes. In addition, the AC indicates the AP 102b to also send the signaling packet at 08:00, and further indicates to periodically send the signaling packet at the interval of five minutes. In this way, a manner used to coordinate the AP 102a and the AP 102b to send the signaling packets is simultaneous sending. For another example, if the network node in wireless networking does not perform high-precision clock synchronization, the control node may alternatively indicate sending delay time of the first network node and the second network node. For example, the AC indicates that delay time of the AP 102a is five seconds, and after one second, indicates that delay time of the AP 102b is four seconds. It may be understood that, in this example, the AP 102a and the AP 102b may also perform simultaneous sending.
Manner 2: Sending at a time interval less than a specified value. In this manner, that the first network node and the second network node send the signaling packets at a same moment does not need to be limited, and there may be a specific sending time interval. For example, sending moments at which the first network node and the second network node send the signaling packets are less than a frame header length of a signaling frame, and there may be specific overlapping time.
Manner 3: Sending at a time interval greater than a time interval required by a signaling packet sent earlier. In this manner, the first network node and the second network node sequentially send the signaling packets. In this way, there is no collision problem when the first network node and the second network node send the signaling packets. Optionally, the control node may indicate the first network node and the second network node to send the signaling packets based on a channel contention mechanism. In other words, the first network node or the second network node sends the signaling packet after obtaining the air interface through contention.

It should be noted that, in the foregoing manner 2 and manner 3, a sending sequence of the first network node and the second network node indicated by the control node is not limited in this application, and may be determined based on an actual scenario. Optionally, the control node may indicate the first network node to send the signaling packet before the second network node sends the signaling packet, or may indicate the first network node to send the signaling packet after the second network node sends the signaling packet. Alternatively, the control node may indicate, in the current periodicity, the first network node to send the signaling packet before the second network node sends the signaling packet, and indicate, in a next periodicity, the first network node to send the signaling packet after the second network node sends the signaling packet. This is not limited in this application.

In addition, during implementation of this application, the control node may send the first indication message to the first network node and the second network node in a plurality of implementations, for example, in a unicast, multicast, or broadcast manner. For example, if the control node uses the unicast manner, S501 may include S501a and S501b. S501a may be that the control node sends an indication message 1 to the first network node in the current periodicity, where the indication message 1 includes an indication that is of the control node and that is for sending the signaling packet by the first network node, and may include, for example, an identifier of the first network node and sending time that is of the signaling packet of the first network node and that is determined by the control node based on the coordination. S501b may be that the control node sends an indication message 2 to the second network node in the current periodicity, where the indication message 2 includes an indication that is of the control node and that is for sending the signaling packet by the second network node, and may include, for example, an identifier of the second network node and sending time that is of the signaling packet of the second network node and that is determined by the control node based on the coordination. The indication message 1 and the indication message 2 are used by the control node to coordinate the first network node and the second network node to send the signaling packets. For another example, if the control node uses the multicast or broadcast manner, the first indication message may include an indication of the control node for the first network node and an indication for the second network node, and may include, for example, an identifier of the first network node, sending time that is of the signaling packet of the first network node and that is determined by the control node based on the coordination, an identifier of the second network node, and sending time that is of the signaling packet of the second network node and that is determined by the control node based on the coordination. In this way, the first network node or the second network node may determine the sending time of the first network node or the second network node from the first indication message.

S502a: The first network node sends the signaling packet based on the received first indication message.

S502b: The second network node sends the signaling packet based on the received first indication message.

In this method, through management and control of the control node in wireless networking, the plurality of network nodes may send signaling packets in order based on a management and control indication of the control node. In comparison with a manner, in a conventional technology, in which each network node needs to occupy an air interface resource in a contention manner to send a signaling packet each time, in this application, the control node may send a coordination indication of the signaling packets to the plurality of network nodes, to reduce unnecessary contention and collisions, and reduce a waste of the air interface resource.

It should be noted that, in scenarios in which the foregoing manner 1 and manner 2 are used, because there is interference of signal cross coverage between the network nodes, an overlapping coverage area may cause a collision of receiving the signaling packets by a terminal device.

In an optional embodiment, a manner that may be used by the control node to coordinate, in the current periodicity, the first network node and the second network node to send the signaling packets is not completely the same as manners respectively used in a plurality of periodicities before the current periodicity. For example, the AC may coordinate, by using the foregoing manner 1 in the 1^{st} periodicity and the 2^{nd} periodicity, the first network node and the second network node to send the signaling packets, coordinate, by using the foregoing manner 2 in the 3^{rd} periodicity and the 4^{th} periodicity, the first network node and the second network node to send the signaling packets, and coordinate, by using the foregoing manner 3 in the 5^{th} periodicity and the 6^{th} periodicity, the first network node and the second network node to send the signaling packets. In this way, a change of the manner used to coordinate the network nodes to send the signaling packets can reduce the waste of the air interface resource in a scenario in which the collision of receiving the signaling packets is reduced. For example, each of the AP 102a, the AP 102b, and an AP 102c needs to occupy the air interface resource for one second to send a signaling packet. If only the manner 3 (for example, a channel contention mechanism in a conventional technology) is used to send the signaling packet, the air interface resource needs to be accumulatively occupied for at least three seconds. However, in the scenario in which the manner 1 is used, the air interface resource needs to be occupied for only one second, and in the scenario in which the manner 2 is used, accumulated time for occupying the air interface resource is also less than three seconds. Therefore, the accumulated time for occupying the air interface resource can be reduced, that is, the waste of the air interface resource can be reduced.

In another optional embodiment, the control node may alternatively set power parameters of the first network node and the second network node, to dynamically change an overlapping coverage area between the network nodes. In this way, a collision problem of the signaling packets that may exist when the first network node and the second network node are coordinated, by using the foregoing manner 1 and manner 2, to send the signaling packets can be resolved.

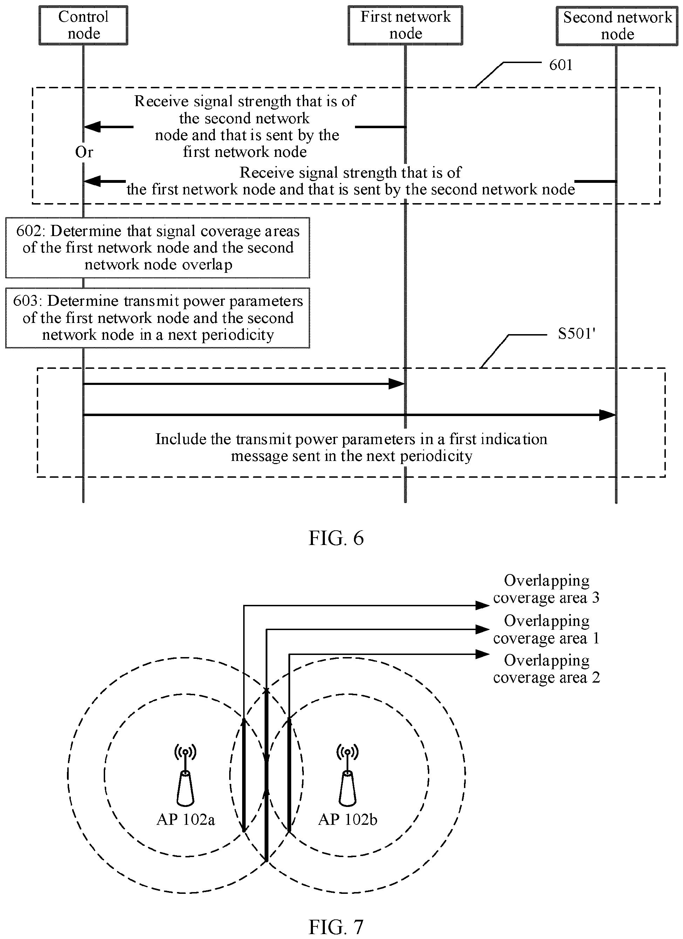

The following describes an implementation in this embodiment by using FIG. 6. This embodiment may be mainly divided into three parts, including calculation of a transmit power parameter, delivery of a signaling parameter, and coordinated sending of signaling. The following is introduced by using the three parts.

### (I) Calculation of the transmit power parameter

### Step 601: The control node receives signal strength that is of the second network node and that is sent by the first network node, or receives signal strength that is of the first network node and that is sent by the second network node.

For example, with reference to FIG. 1, the first network node (assuming to be the AP 102a) may obtain signal strength between the first network node and one or more other APs in wireless networking in an active scanning or passive scanning manner. It is assumed that the signal strength of the second network node (assuming to be the AP 102b) is obtained. Then, the AP 102a may send obtained signal strength information of the AP 102b to the control node (AC 101) in any form. It may be understood that, a form of the signal strength information sent by the AP 102a may be preset, and the form of the signal strength information may be a form, for example, a signal strength matrix (where for example, each row of the matrix may correspond to one AP, each column of the matrix may also correspond to one AP, and a location of the matrix may indicate that an AP corresponding to a matrix row of the location obtains, through detection, signal strength of an AP corresponding to a matrix column of the location), or a signal strength list (where in the list, there may be, for example, signal strength information of another AP that can be obtained by an AP through detection). Similarly, the AP 102b may also obtain signal strength information of the AP 102a, and send the signal strength information to the AC 101.

During implementation of this application, the AC 101 may indicate an AP to send signal strength information; or an AP may be preconfigured to periodically and actively send signal strength information to the AC 101. This is not limited in this application. In addition, in wireless networking, all APs may send signal strength information to the AC 101, or some APs may send signal strength information to the AC 101. Alternatively, different AP groups may be set in wireless networking, where APs included in some AP groups send signal strength information to the AC 101.

### Step 602: The control node determines, based on the information received in step 601, that signal coverage areas of the first network node and the second network node overlap.

For example, it is assumed that the AC 101 may obtain signal strength information respectively sent by the AP 102a, the AP 102b, and the AP 102c. The AC 101 may perform determination on every two of the APs, to determine whether signal coverage areas between the APs overlap.

Optionally, if the signal strength information sent by the first network node includes the signal strength of the second network node, or the signal strength information sent by the second network node includes the signal strength of the first network node, the control node may determine that the signal coverage areas of the first network node and the second network node overlap. For example, if the signal strength information sent by the AP 102a includes signal strength of the AP 102c, the AC 101 may determine that the signal coverage areas of the AP 102a and the AP 102c overlap. If the signal strength information sent by the AP 102a does not include signal strength of the AP 102c, the AC 101 may determine that the signal coverage areas of the AP 102a and the AP 102c do not overlap.

Optionally, in a scenario in which wireless networking includes a large quantity of network nodes, many signal coverage areas of the network nodes usually overlap. Consequently, there is a large calculation amount for the control node. During implementation of this application, when the quantity of network nodes included in wireless networking is greater than or equal to a preset quantity threshold, after receiving the signal strength that is of the second network node and that is sent by the first network node, or receiving the signal strength that is of the first network node and that is sent by the second network node, the control node may further determine, when the signal strength that is of the second network node and that is sent by the first network node is greater than or equal to a preset signal strength threshold, or when the signal strength that is of the first network node and that is sent by the second network node is greater than or equal to a preset signal strength threshold, that the signal coverage areas of the first network node and the second network node overlap. It may be understood that, when the signal coverage areas of the network nodes overlap, and there is higher signal strength obtained by scanning from each other, usually, there is greater interference when signaling packets are sent. Therefore, the preset signal strength threshold is set to reduce the calculation amount for the control node. It should be noted that the preset signal strength threshold may be preset, or may be determined by using a historical empirical value. This is not limited in this application.

In the foregoing example, that the signal coverage areas overlap may indicate that a STA may simultaneously receive, at a location, signaling packets sent by two APs, and power of the signaling packets from the two APs is the same (where in this embodiment of this application, a location that meets the condition may be defined as an "overlapping coverage area", and two APs having an overlapping coverage area may be defined as "overlapping APs"). Consequently, there is a problem that the STA cannot correctly receive the signaling packets. For example, FIG. 7 is a schematic diagram of a scenario of a network node group according to an embodiment of this application. There are three overlapping coverage areas between the AP 101a and the AP 102b: an overlapping coverage area 1, an overlapping coverage area 2, and an overlapping coverage area 3. If the STA is located in any one of the overlapping coverage areas, and if the STA simultaneously receives the signaling packets sent by the AP 102a and the AP 102b, there is a problem that the signaling packets respectively from the AP 102a and the AP 102b cannot be correctly distinguished.

Based on the content described in step 602, because there may be the overlapping coverage area between the APs, there may be a problem that the STA cannot correctly obtain the signaling packet through parsing. In view of this, during implementation of this application, the AC may set, to change, power between two APs, which are overlapping APs, so that an overlapping coverage area between the overlapping APs can have a feature of a dynamic change. Therefore, a problem that when being located in the overlapping coverage area, the STA cannot correctly obtain the signaling packet through parsing can be reduced.

**Step 603: The control node determines transmit power parameters of the first network node and the second network node in the next periodicity,** where the transmit power parameters indicate transmit power used by the first network node and the second network node to send the signaling packets, and the transmit power used in the next periodicity is not completely the same as transmit power parameters respectively used in a plurality of periodicities before the next periodicity.

For example, the AC may indicate, for a plurality of times, that power used by the APs to send the signaling packets may not be completely the same, so that the overlapping coverage area between the APs can be dynamically changed.

For example, the transmit power parameters may directly or indirectly indicate the transmit power used by the first network node and the second network node to send the signaling packets.

In an optional embodiment, it is assumed that 0 indicates that the transmit power of the network node is original power, and another non-zero value indicates that the transmit power of the network node is changed power. For example, -1 indicates power decrease, and +1 indicates power increase. In addition, during implementation of this application, different levels may be further set when the power is changed. For example, -1 indicates that the power is reduced by one level, and -2 indicates that the power is reduced by two levels. During actual implementation, specific configuration may be performed based on a requirement. That the AC 101 determines transmit power of the AP 102a and the AP 102b may be represented as any one of the following manners:
(1) Transmit power of a signaling packet corresponding to the AP 102a is original power, and transmit power of a signaling packet corresponding to the AP 102b is changed power, where the changed power includes increased power or decreased power.
(2) Transmit power of a signaling packet corresponding to the AP 102a is changed power, and transmit power of a signaling packet corresponding to the AP 102b is original power.
(3) Transmit power of a signaling packet corresponding to the AP 102a is original power, and transmit power of a signaling packet corresponding to the AP 102b is original power.

The following Table 1 is an example of a transmit power parameter according to an embodiment of this application.

**Table 1**

| AP 102a | AP 102b |
|---|---|
| 0 | 0 |
| 1 | 0 |
| 0 | 1 |
| 0 | 0 |
| 1 | 0 |
| 0 | 1 |
| ... | ... |

It can be learned from the foregoing Table 1 that the AC may periodically set transmit power parameters of the AP 102a and the AP 102b, to implement a periodic change of the overlapping coverage area between the AP 102a and the AP 102b. It should be noted that, during implementation of this application, the AC may alternatively indicate an aperiodic dynamic change of transmit power parameters of two APs included in overlapping APs. For example, the AC may randomly determine, based on a plurality of indications indicating that the power used by the APs to send the signaling packets is not completely the same, the transmit power parameters of the two APs included in the overlapping APs, to implement a dynamic change of the overlapping coverage area.

In addition, if the AC obtains a plurality of groups of overlapping APs, where for example, the plurality of groups of overlapping APs include (the AP 102a and the AP 102b) described in the foregoing content, and may further include (the AP 102b and the AP 102c), the plurality of groups of overlapping APs may be sorted in descending order of signal strength. Then, the AC may start processing from an overlapping AP with strong signal strength, to determine transmit power parameters of each group of overlapping APs one by one. In addition, it is assumed that two groups of overlapping APs include a same AP, for example, the AP 102b, after the transmit power parameter of the AP 102b is determined based on one group of overlapping APs including the AP 102b, when the other group of overlapping APs including the AP 102b is determined, a transmit power parameter of another AP may be further determined based on the transmit power parameter of the AP 102b.

In another optional embodiment, the transmit power parameter may alternatively be real-time transmit power determined based on an adjustment manner shown in Table 1 in which the transmit power of the network node is the original power or the changed power. To be specific, the real-time transmit power used by the AP to send the signaling packet may be directly indicated by an AC side, or may be further determined by an AP side based on an indication of the AC of whether to adjust the power.

### (II) Delivery of the signaling parameter

### Step 501': The control node includes the transmit power parameters in a first indication message sent in the next periodicity.

For example, the first indication message sent by the AC to the AP may include but is not limited to the following information:

### (1) Signaling type

A type of signaling that the AC indicates the AP to send may include, for example, but is not limited to, a beacon frame (beacon frame) and a probe request (probe request) frame.

### (2) First parameter used to implement coordination

The coordination used by the AC to indicate the AP to perform sending may include but is not limited to: simultaneous sending, sending at a time interval less than a specified value, or sending at a time interval greater than a time interval required by a signaling packet sent earlier.

Optionally, the AC may indicate one sending time interval T to the AP. If T = 0, it indicates that the AP immediately sends the signaling packet after receiving an indication message. If T ≠ 0, it indicates that the AP sends the signaling packet after a delay of the time interval T after receiving an indication message. For example, for the AP 102a and the AP 102b, the AC may indicate T1 to the AP 102a, and indicate T2 to the AP 102b. It may be understood that, for example, the AP 102a may be unaware that the AC coordinates the AP 102a and the AP 102b to send the signaling packets, and the AP 102a only needs to send the signaling packet based on T indicated by the AC.

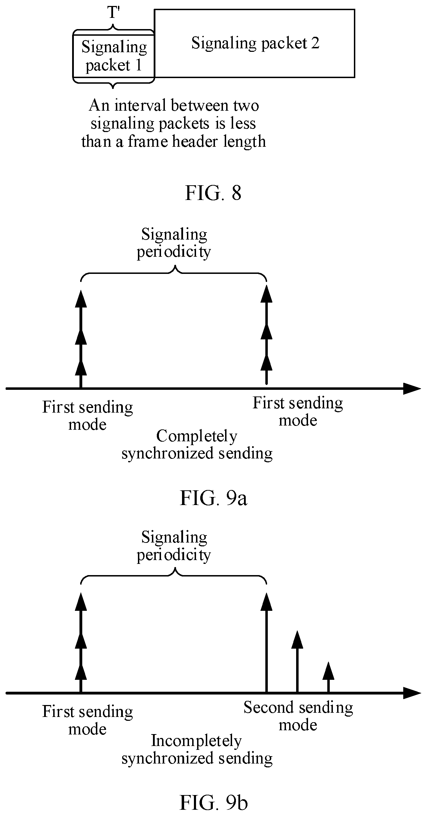

In addition, the AC may separately determine T1 and T2 based on a manner used to determine to coordinate the AP 102a and the AP 102b. FIG. 8 is a schematic diagram of a scenario of coordination according to an embodiment of this application. It is assumed that the AC determines that a manner of coordinating the AP 102a and the AP 102b to send the signaling packets is sending at the time interval less than the specified value. As shown in FIG. 8, a signaling packet 1 is the signaling packet sent by the AP 102a, a signaling packet 2 is the signaling packet sent by the AP 102b, and a sending time interval is T'. In addition, if the AC simultaneously sends an indication message to the AP 102a and the AP 102b, it may be understood that T1 + T' = T2.

It may be understood that, during implementation of this application, through calculation of the transmit power parameter based on the content in the first part, the AC may indicate to preferentially use the manner 1 and the manner 2 to coordinate a plurality of APs to send the signaling packets, to reduce occupation of the air interface resource. Based on a fact that the AC indicates, to the APs, the transmit power parameters that are not completely the same, even if the STA simultaneously receives the signaling packets sent by the plurality of APs, when the APs send the signaling packets by using different transmit power, the signaling packets can be correctly obtained through parsing. Therefore, in this application, occupation time of the air interface can be reduced, and occurrence of a collision problem caused by contention can be reduced.

### (3) Transmit power parameter

Based on the descriptions of the foregoing content, the transmit power parameter may be real-time transmit power used by the AP to further determine, based on the indication message, to send the signaling packet when the AC indirectly indicates the AP whether to adjust the power; or may be real-time transmit power that is indicated by the AC and that is used by the AP to send the signaling packet.

### (4) Sending mode indication parameter

A sending mode that is indicated by the AC and in which the AP performs sending may be: sending the signaling packet based on an indication of the first indication message (where this type of sending may also be referred to as a "completely synchronized sending mode" in this embodiment of this application), or sending the signaling packet based on the first indication message and the channel contention mechanism (where this type of sending may also be referred to as an "incompletely synchronized sending mode" in this embodiment of this application). The completely synchronized sending mode may indicate that the AP sends the signaling packet based on the indication of the AC. For example, if the sending time interval T = 0, the AP immediately sends the signaling packet after obtaining the indication message through parsing without detecting a status of the air interface. The incompletely synchronized sending mode may indicate that after receiving the indication message of the AC, the AP may further send the signaling packet based on a transceiver status of the AP or a detection result of wireless networking, or after obtaining the air interface through contention.

In addition, during implementation of this application, corresponding sending modes used by the first network node and the second network node to send signaling packets in a coordinated manner in a plurality of periodicities are not completely the same. For example, if the control node determines that a first sending mode is used in a previous signaling periodicity, the first network node is indicated, by using the first indication message, to use a second sending mode in a current signaling periodicity. FIG. 9a is a schematic diagram of a scenario of a sending mode according to an embodiment of this application. In two adjacent periodicities of a signaling periodicity, assuming that the AC indicates three APs to simultaneously send signaling packets based on the first sending mode, the completely synchronized sending mode is used. FIG. 9b is a schematic diagram of a scenario of another sending mode according to an embodiment of this application. In two adjacent periodicities of a signaling periodicity, assuming that the AC indicates three APs to simultaneously send signaling packets based on the first sending mode in a previous signaling periodicity, and send signaling packets based on the second sending mode in a contention manner in a next signaling periodicity, the completely synchronized sending mode is used.

It may be understood that, the mode that is indicated by the AC and in which the AP sends the signaling packet is flexible, and corresponding configuration may be performed based on an actual scenario. For example, different sending modes and coordinated manners may be used, a periodic or aperiodic change may be further implemented, and the configuration may be performed by the AC based on the actual scenario in wireless networking.

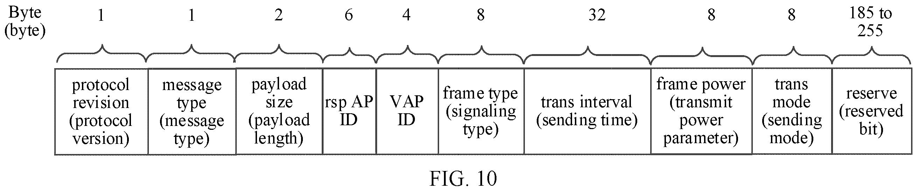

Based on the foregoing described specific information that may be included in the first indication message, FIG. 10 is an example diagram of an indication message according to an embodiment of this application. With reference to the following Table 2, the indication message sent by the AC to the AP may include the following parameters, and a meaning of each parameter is briefly described.

**Table 2**

| Parameter type | Parameter | Meaning |
|---|---|---|
| Basic information of the message | protocol revision | Protocol version |
| | message type | Message type |
| | payload size | Payload length |
| AP index message | rsp AP ID | AP identifier: The AC indicates an AP to which the message is sent |
| | Virtual access point (virtual access point) VAPID | VAP identifier: The AC indicates a VAP of an AP to which a signaling frame is sent and a VAP that sends the signaling frame |
| Sending parameter of the signaling | frame type | Type of the frame that the AC indicates the AP to send |
| frame | trans interval | Sending time interval T indicated by the AC to the AP |
| | frame power | Power that is indicated by the AC and that is for the AP to send the signaling frame. |
| | trans mode | Sending mode that is indicated by the AC and in which the AP sends the signaling frame |
| | reserve | Reserved bit |

The "frame type" parameter in Table 2 may be determined by agreeing on a mapping relationship between the frame type and a type, or may be determined by using an original frame type in the 802.11 protocol. For the "trans interval" parameter, if a value of T is 0, the AP immediately sends a packet after receiving the indication message; or if a value of T is not 0, the AP sends a packet with a delay of T after receiving the message. The "frame power" parameter may be the transmit power parameter described in the foregoing embodiment. For the " trans mode " parameter, the sending mode may be set, by using 1, to send a signaling packet based on an indication, and the sending mode may be set, by using 2, to send a signaling packet based on an indication and the channel contention mechanism. The "reserve" parameter may be used as a reserved bit for extending some parameters related to signaling frame sending.

### (III) Coordinated sending of the signaling

### S502a: The first network node sends the signaling packet based on the received first indication message.

### S502b: The second network node sends the signaling packet based on the received first indication message.

To improve an effect of receiving, by the STA, the signaling packet sent by the AP, during implementation of this application, the control node may further send a second indication message to the first network node and the second network node, where the second indication message indicates the first network node and the second network node to send enhanced packets to a connected terminal, and the enhanced packet is used by the connected terminal device to enhance signal strength of the received signaling packet. The second indication message may include but is not limited to one or a combination of the following information:

### (1) Type of the enhanced packet

For example, the type of the enhanced packet may include but is not limited to a management frame, a control frame, and a data frame. In this embodiment of this application, the AP may determine, based on the type of the enhanced packet, how to send the enhanced packet to the STA, to enhance signal strength of the signaling packet received by the STA. For example, the STA may pre-store a mapping relationship between the type of the enhanced packet and an enhancement manner, to determine, based on the received enhanced packet, a manner of enhanced processing to be performed on the signaling packet.

### (2) Quantity of enhanced packets

Optionally, the quantity of enhanced packets that the AC indicates the AP to send may be determined based on a factor, for example, a connection status of wireless networking or a target enhancement effect. It may be understood that a larger quantity of enhanced packets indicates a better enhancement effect.

### (3) Sending time interval of the enhanced packet

Similar to that the AC indicates the AP to send the signaling packet, the AC may also indicate a time interval Tz for the AP to send the enhanced packet. For example, if Tz = 0, the AP may continuously send a plurality of enhanced packets; or if Tz ≠ 0, the AP may send one enhanced packet at an interval, where the interval may be determined based on Tz.

### (4) Sending rate of the enhanced packet

For example, to reduce occupation time of an air interface, the AC may indicate the AP to increase a packet sending rate.

It should be noted that the second indication message may further include other information indicating the AP to send the enhanced packet, for example, indicating a sending manner of the AP, such as unicast, multicast, or broadcast. Specific content included in the second indication message is not limited in this application.

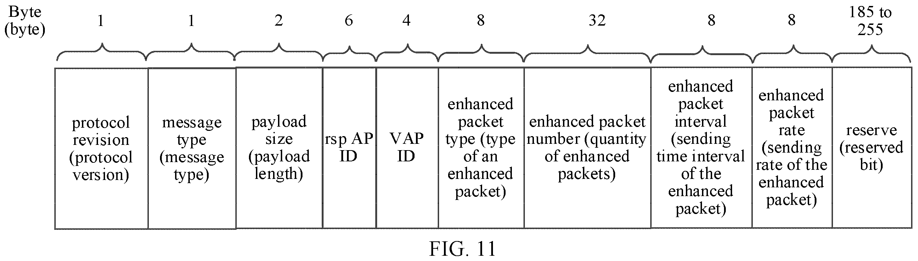

Based on the foregoing described specific information that may be included in the second indication message, FIG. 11 is an example diagram of a second indication message according to an embodiment of this application. With reference to the following Table 3, the second indication message sent by the AC to the AP may include the following parameters, and a meaning of each parameter is briefly described.

**Table 3**

| Parameter type | Parameter | Meaning |
|---|---|---|
| Basic information of the message | protocol revision | Protocol version |
| | message type | Message type |
| | payload size | Payload length |
| AP index message | rsp AP ID | AP identifier: The AC indicates an AP to which the message is sent |
| | VAP ID | VAP identifier: The AC indicates a VAP of an AP to which an enhanced frame is sent and a VAP that sends the enhanced frame |
| Sending parameter of the enhanced frame | enhanced packet type | Type of the enhanced frame that the AC indicates the AP to send |
| | enhanced packet number | Quantity of enhanced frames that the AC indicates the AP to send |
| | enhanced packet interval | Interval that is indicated by the AC and at which the AP sends the enhanced frame |
| | enhanced packet rate | Rate that is indicated by the AC and at which the AP sends the enhanced frame |
| | reserve | Reserved bit |

The "enhanced packet type" parameter in Table 3 may be determined by agreeing on a mapping relationship between a frame type and a type, or may be determined by using 802.11 in coordination with an original frame type. The "enhanced packet rate" parameter may be represented by a modulation and coding scheme (modulation and coding scheme, MCS) value. The "reserve" parameter may be used to extend some parameters related to enhanced frame sending.

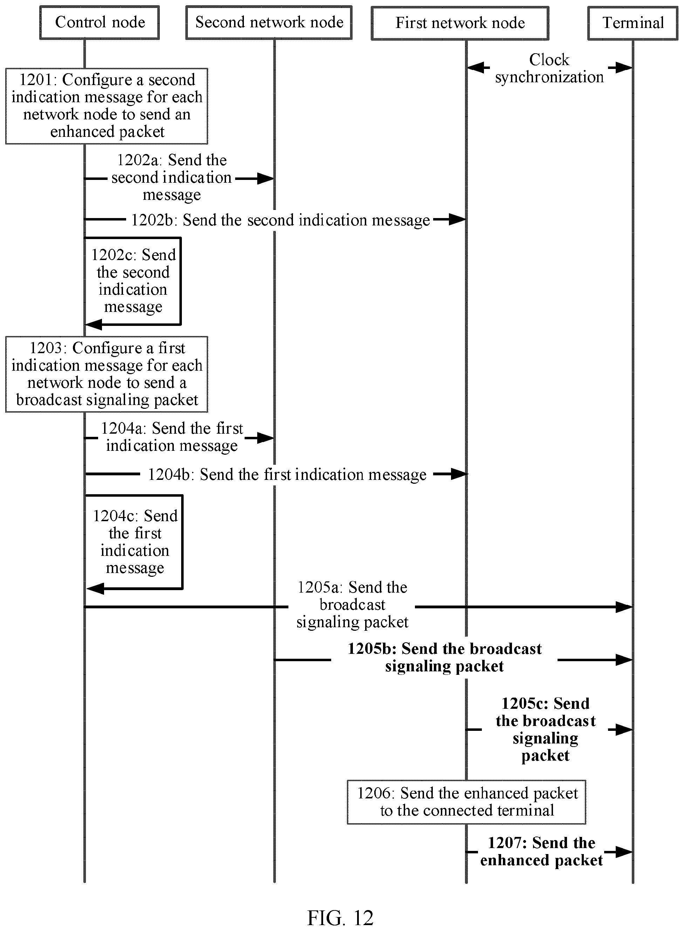

In an optional embodiment, after indicating a plurality of APs included in wireless networking to send the broadcast signaling packet in a centralized manner, the AC may indicate the AP to send the enhanced packet, to ensure signal strength of a STA connected to each AP and a packet transceiver effect. FIG. 12 is a schematic interaction diagram of a method for sending a signaling packet in a coordinated manner according to an embodiment of this application.

Step 1201: A control node configures a second indication message for each network node to send an enhanced packet. In FIG. 12, a first network node and a second network node are used as an example, where it is assumed that a terminal is connected to the first network node, and high-precision clock synchronization is performed on the terminal and the first network node. In this case, the terminal may receive broadcast signaling packets sent by a plurality of APs in a centralized manner.

Step 1202a: The control node sends the second indication message to the second network node.

Step 1202b: The control node sends the second indication message to the first network node.

Step 1202c: The control node sends the second indication message to the control node.

Step 1202a to step 1202c indicate that the control node separately indicates each network node to send the enhanced packet. It may be understood that the control node in this application is also a network node in wireless networking. Therefore, the control node may also indicate the control node to send the enhanced packet.

Step 1203: The control node configures a first indication message for each network node to send the broadcast signaling packet.

Step 1204a: The control node sends the first indication message to the second network node.

Step 1204b: The control node sends the first indication message to the first network node.

Step 1204c: The control node sends the first indication message to the control node.

Step 1205a: The control node sends the broadcast signaling packet.

Step 1205b: The second network node sends the broadcast signaling packet.

Step 1205c: The first network node sends the broadcast signaling packet.

Step 1203 to step 1205c indicate a process in which an AC indicates the AP in wireless networking to send the broadcast signaling packet, and the AP sends the broadcast signaling packet.

Step 1206: The first network node sends the enhanced packet to the connected terminal.

Step 1207: The first network node sends the enhanced packet.

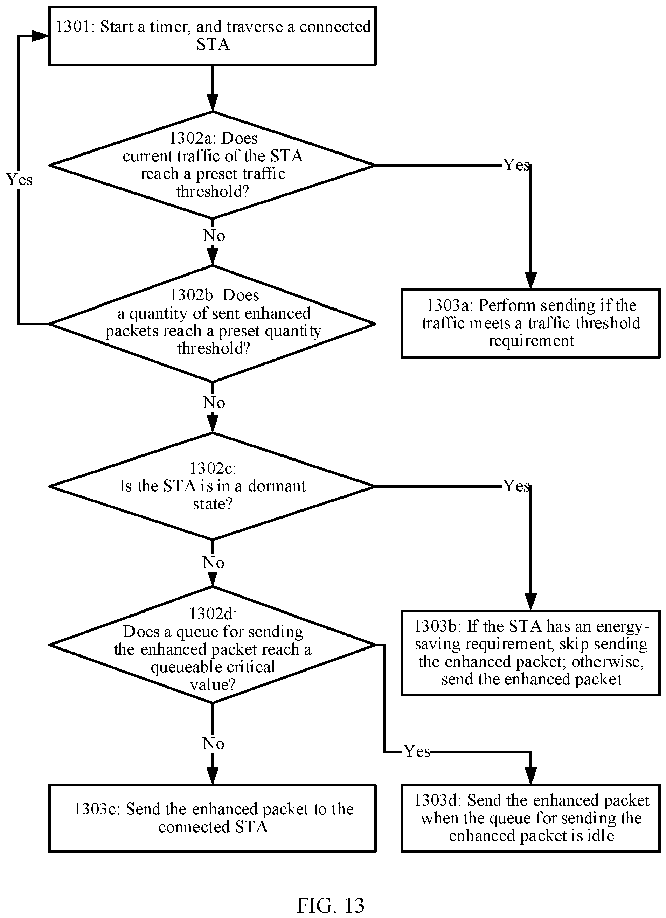

After the second indication message and the first indication message are sent, it is considered that sending the enhanced packet to the terminal increases power consumption of the terminal. Further, if any network node (assuming to be the first network node) in wireless networking is used as an example, power consumption for the first network node to send the enhanced packet increases. FIG. 13 is another interaction flowchart of a method for sending a signaling packet in a coordinated manner according to an embodiment of this application.

Before step 1206, the first network node detects the connected terminal and a sending status of the enhanced packet, and sends, based on the second indication message, the enhanced packet to a connected terminal that meets a preset detection condition. A specific implementation may be as follows:
Step 1301: An AP starts a timer, and traverses a connected STA.
Step 1302a: Determine whether current traffic of the STA reaches a traffic threshold. If the current traffic of the STA reaches the traffic threshold, step 1303a is performed. If the current traffic of the STA does not reach the traffic threshold, step 1302b is performed. It should be noted that this step is to separately perform determination on the STAs traversed by the AP in step 1301. For example, if a STA 1 and a STA 2 are traversed, the AP may separately perform traffic detection on the STA 1 and the STA 2.
Step 1303a: Perform sending if the traffic meets a traffic threshold requirement.
Step 1302b: Determine whether a quantity of sent enhanced packets reaches a preset quantity threshold. If the quantity of sent enhanced packets reaches the preset quantity threshold, step 1301 is returned to be performed and processing in a next signaling periodicity is waited for. If the quantity of sent enhanced packets does not reach the preset quantity threshold, step 1302c is performed. For example, the AP may detect a quantity of sent enhanced packets in a current signaling periodicity. If the sending quantity in the current signaling periodicity reaches the preset threshold, step 1301 may be returned to be performed and the processing in the next signaling periodicity is waited for.
Step 1302c: Determine whether the STA is in a dormant state. If the STA is in the dormant state, step 1303b is performed. If the STA is not in the dormant state, step 1302d is performed.
Step 1303b: If the STA has an energy-saving requirement, skip sending the enhanced packet; otherwise, send the enhanced packet. For example, if the STA enables a power-saving mode, when obtaining the scenario through detection, the AP no longer sends the enhanced packet, to avoid waking up the STA and causing power consumption of the STA.
Step 1302d: Determine whether a queue for sending the enhanced packet reaches a queueable critical value. If the queue for sending the enhanced packet reaches the queueable critical value, step 1303d is performed. If the queue for sending the enhanced packet does not reach the queueable critical value, step 1303c is performed.
Step 1303c: Send the enhanced packet to the connected STA.
Step 1303d: Send the enhanced packet when the queue for sending the enhanced packet is idle.

It should be noted that, during implementation of this application, an execution sequence of step 1302a to step 1302d is not limited, and may be defined based on an actual scenario. In addition, the AP may alternatively choose to capture some steps in step 1302a to step 1302d for determining. This is not limited in this application. The preset traffic threshold, the preset quantity threshold, or the queueable critical value may be configured by an AC, and may be flexibly changed based on an actual use scenario. This is not limited in this application.

An embodiment of this application further provides a system for sending a signaling packet in a coordinated manner. The system may include the control node, the first network node, and the second network node that are described in the foregoing method embodiment. The control node may perform content that can be implemented by the control node and that is described in the foregoing method embodiment, the first network node may perform content that can be implemented by the first network node and that is described in the foregoing method embodiment, and the second network node may perform content that can be implemented by the second network node and that is described in the foregoing method embodiment. It should be noted that types and quantities (where in this application, only one control node, one first network node, and one second network node are used as an example) of control nodes and network nodes included in the system are not limited in this application, and may be specifically set based on an actual scenario.

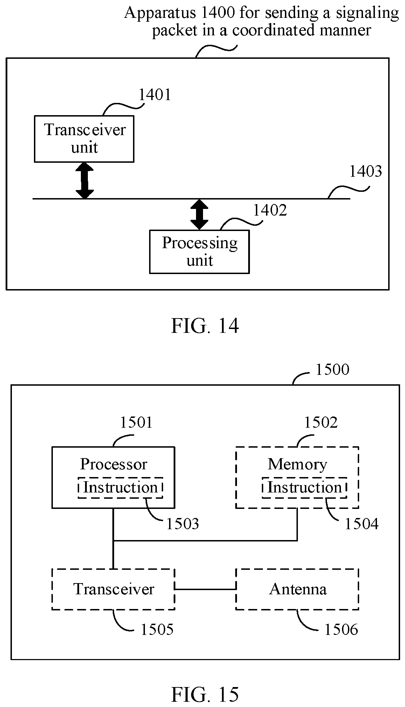

Based on a same invention concept as the foregoing method embodiment, an embodiment of this application further provides an apparatus 1400 for sending a signaling packet in a coordinated manner. As shown in FIG. 14, the apparatus may be disposed on a control node. The apparatus 1400 for sending the signaling packet in the coordinated manner includes a transceiver unit 1401 and a processing unit 1402. The apparatus 1400 may be configured to implement the method described in the foregoing method embodiment. Optionally, the transceiver unit 1401 and the processing unit 1402 may be connected to each other through a communication line 1403. The communication line 1403 may be a peripheral component interconnect (peripheral component interconnect, PCI for short) bus, an extended industry standard architecture (extended industry standard architecture, EISA for short) bus, or the like. The communication line 1403 may be classified into an address bus, a data bus, a control bus, and the like. For ease of representation, only one bold line is for representation in FIG. 14, but this does not mean that there is only one bus or only one type of bus.

The processing unit 1402 is configured to determine a manner of coordinating, in a current periodicity, a first network node and a second network node to send signaling packets. The transceiver unit 1401 is configured to send a first indication message in the current periodicity, where the first indication message is used to coordinate the first network node and the second network node to send the signaling packets, where the coordination uses any one of the following manners: simultaneous sending, sending at a time interval less than a specified value, or sending at a time interval greater than a time interval required by a signaling packet sent earlier.

In a possible design, the transceiver unit 1401 is further configured to: receive signal strength that is of the second network node and that is sent by the first network node, or receive signal strength that is of the first network node and that is sent by the second network node. The processing unit 1402 is further configured to: when the control node receives the signal strength that is of the second network node and that is sent by the first network node, or receives the signal strength that is of the first network node and that is sent by the second network node, determine that signal coverage areas of the first network node and the second network node overlap.

In a possible design, when the coordination is simultaneous sending or sending at the time interval less than the specified value, the processing unit 1402 is further configured to determine transmit power parameters of the first network node and the second network node in a next periodicity. The transceiver unit 1401 is configured to include the transmit power parameters in a first indication message sent in the next periodicity, where the transmit power parameters indicate transmit power used by the first network node and the second network node to send the signaling packets, and the transmit power used in the next periodicity is not completely the same as transmit power parameters respectively used in a plurality of periodicities before the next periodicity.

In a possible design, the transmit power of the first network node is original power, and the transmit power of the second network node is changed power, where the changed power includes increased power or decreased power; the transmit power of the first network node is changed power, and the transmit power of the second network node is original power; or the transmit power of the first network node is original power, and the transmit power of the second network node is original power.

In a possible design, a manner of coordinating, in the current periodicity, the first network node and the second network node to send the signaling packets is not completely the same as manners respectively used in a plurality of periodicities before the current periodicity.

In a possible design, the first indication message further includes a sending mode indication parameter, and the sending mode indication parameter indicates the first network node and the second network node to send the signaling packets, or send the signaling packets based on a channel contention mechanism. A corresponding sending mode used by the first network node and the second network node to send the signaling packets in the current periodicity is not completely the same as corresponding sending modes respectively used to send the signaling packets in the plurality of periodicities before the current periodicity.

In a possible design, when a quantity of network nodes included in wireless networking is greater than or equal to a preset quantity threshold, the processing unit 1402 is configured to: after receiving the signal strength that is of the second network node and that is sent by the first network node, or receiving the signal strength that is of the first network node and that is sent by the second network node, when determining that the signal strength that is of the second network node and that is sent by the first network node is greater than or equal to a preset signal strength threshold, or determining that the signal strength that is of the first network node and that is sent by the second network node is greater than or equal to a preset signal strength threshold, determine that the signal coverage areas of the first network node and the second network node overlap.

In a possible design, the processing unit 1402 is further configured to send a second indication message to the first network node and the second network node, where the second indication message indicates the first network node and the second network node to send enhanced packets to a connected terminal device, and the second indication message includes one or a combination of the following information: a type of the enhanced packet, a quantity of enhanced packets, a sending time interval of the enhanced packet, or a sending rate of the enhanced packet, where the enhanced packet is used by the connected terminal device to enhance signal strength of the received signaling packet.

In a possible design, the signaling packet is a broadcast signaling packet.

In a possible design, if the control node sends the first indication message in a broadcast manner, the first indication message includes: an identifier of the first network node, sending time that is of the signaling packet of the first network node and that is determined by the control node based on the coordination, an identifier of the second network node, and sending time that is of the signaling packet of the second network node and that is determined by the control node based on the coordination. If the control node sends the first indication message in a unicast manner, a first indication message sent by the control node to the first network node includes: an identifier of the first network node and sending time that is of the signaling packet of the first network node and that is determined by the control node based on the coordination, and a first indication message sent by the control node to the second network node includes: an identifier of the second network node and sending time that is of the signaling packet of the second network node and that is determined by the control node based on the coordination.

In another example, the apparatus for sending the signaling packet in the coordinated manner shown in FIG. 14 may alternatively be disposed on a network node. In this example, the transceiver unit 1401 is configured to receive a first indication message sent by a control node in a current periodicity, where the first indication message is used to coordinate a first network node and a second network node to send signaling packets. The processing unit 1402 is configured to send the signaling packet based on the first indication message. The coordination uses any one of the following manners: simultaneous sending, sending at a time interval less than a specified value, or sending at a time interval greater than a time interval required by a signaling packet sent earlier.

In a possible design, the processing unit 1402 is configured to obtain signal strength of the second network node through detection. The transceiver unit 1401 is configured to send the signal strength of the second network node to the control node, so that the control node determines that signal coverage areas of the first network node and the second network node overlap.

In a possible design, when the coordination is simultaneous sending or sending at the time interval less than the specified value, the processing unit 1402 is configured to determine, from the first indication message, a carried transmit power parameter of the first network node, where the transmit power parameters indicate transmit power used by the first network node and the second network node to send the signaling packets, and transmit power used in a next periodicity is not completely the same as transmit power parameters respectively used in a plurality of periodicities before the next periodicity. The processing unit 1402 is configured to determine, based on the transmit power parameter, the transmit power used for sending the signaling packet.

In a possible design, when configured to determine, based on the transmit power parameter, the transmit power used for sending the signaling packet, the processing unit 1402 is specifically configured to determine, based on the transmit power parameter, that the transmit power is original power or changed power, where the changed power includes increased power or decreased power.

In a possible design, the first indication message further includes a sending mode indication parameter, and the sending mode indication parameter indicates the first network node and the second network node to send the signaling packets, or send the signaling packets based on a channel contention mechanism. A corresponding sending mode used by the first network node and the second network node to send the signaling packets in the current periodicity is not completely the same as corresponding sending modes respectively used to send the signaling packets in a plurality of periodicities before the current periodicity.

In a possible design, the transceiver unit 1401 is further configured to receive a second indication message sent by the control node, where the second indication message includes one or a combination of the following information: a type of an enhanced packet, a quantity of enhanced packets, a sending time interval of the enhanced packet, or a sending rate of an enhanced packet, where the enhanced packet is used by a connected terminal device to enhance signal strength of the received signaling packet. The processing unit 1402 is further configured to send, based on the second indication message, the enhanced packet to the connected terminal device.

In a possible design, when configured to send, based on the second indication message, the enhanced packet to the connected terminal device, the processing unit 1402 is specifically configured to: detect the connected terminal and a sending status of the enhanced packet, and send, based on the second indication message, the enhanced packet to a connected terminal that meets a preset detection condition.

The preset detection condition includes but is not limited to one or a combination of the following conditions:
Traffic of the connected terminal is less than or equal to a preset traffic threshold.

A quantity of sent enhanced packets in a current preset periodicity is less than or equal to a preset quantity threshold.

The connected terminal is in a non-dormant state.

The connected terminal has no energy-saving requirement.

A quantity of queues for sending the enhanced packet is less than a queueable critical value.

In a possible design, the signaling packet is a broadcast signaling packet.

In a possible design, when the first indication message is a broadcast message, the first indication message includes: an identifier of the first network node, sending time that is of the signaling packet of the first network node and that is determined by the control node based on the coordination, an identifier of the second network node, and sending time that is of the signaling packet of the second network node and that is determined by the control node based on the coordination. When the first indication message is a unicast message, the first indication message includes: an identifier of the first network node and sending time that is of the signaling packet of the first network node and that is determined by the control node based on the coordination.

It should be noted that, in embodiments of this application, division into modules is an example and is merely logical function division. In actual implementation, there may be another division manner. For example, a plurality of units or components may be combined or integrated into another system, or some features may be ignored or not performed. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

Based on a same concept as the foregoing method for sending the signaling packet in the coordinated manner, as shown in FIG. 15, an embodiment of this application further provides a schematic diagram of a structure of another apparatus 1500 for sending a signaling packet in a coordinated manner. The apparatus 1500 may be configured to implement the method described in the foregoing method embodiment. For details, refer to the descriptions in the foregoing method embodiment. The apparatus 1500 may include one or more processors 1501. The processor 1501 may be a general-purpose processor, a dedicated processor, or the like. For example, the processor 1501 may be a baseband processor or a central processing unit. The baseband processor may be configured to process a communication protocol and communication data. The central processing unit may be configured to: control an apparatus (for example, a base station, a terminal, or a chip) for sending a signaling packet in a coordinated manner, execute a software program, and process data of the software program. The apparatus for sending the signaling packet in the coordinated manner may include a transceiver unit, configured to input (receive) and output (send) a signal. For example, the transceiver unit may be a transceiver, a radio frequency chip, or the like.

The apparatus 1500 includes one or more processors 1501, and the one or more processors 1501 may implement the method shown in the foregoing embodiment.

Optionally, in addition to implementing the method in the foregoing embodiment, the processor 1501 may further implement another function.

Optionally, in a design, the processor 1501 may execute instructions, to enable the apparatus 1500 to perform the method described in the foregoing method embodiment. All or some of the instructions, for example, an instruction 1503, may be stored in the processor, or all or some of the instructions, for example, an instruction 1504, may be stored in a memory 1502 coupled to the processor. Alternatively, the apparatus 1500 may be enabled to perform the method described in the foregoing method embodiment by using the instruction 1503 and the instruction 1504.

In another possible design, the apparatus 1500 may include one or more memories 1502, where the memory 1502 stores the instruction 1504, and the instruction may be run on the processor, to enable the apparatus 1500 to perform the method described in the foregoing method embodiment. Optionally, the memory may further store data. Optionally, the processor may also store instructions and/or data. For example, the one or more memories 1502 may store a correspondence described in the foregoing embodiment, or a related parameter or table in the foregoing embodiment. The processor and the memory may be separately disposed, or may be integrated together.

In still another possible design, the apparatus 1500 may further include a transceiver 1505 and an antenna 1506. The processor 1501 may be referred to as a processing unit, and controls the apparatus (a terminal or a base station). The transceiver 1505 may be referred to as a transceiver machine, a transceiver circuit, a transceiver unit, or the like, and is configured to implement a transceiver function of the apparatus through the antenna 1506.

It should be noted that the processor in this embodiment of this application may be an integrated circuit chip, and has a signal processing capability. In an implementation process, the steps in the foregoing method embodiments may be implemented by using a hardware integrated logic circuit in the processor or instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The methods, steps, and logic block diagrams that are disclosed in embodiments of this application may be implemented or performed. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in a memory. The processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM) and is used as an external cache. By way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include, but is not limited to these memories and any memory of another appropriate type.

An embodiment of this application further provides a computer-readable storage medium. The computer-readable storage medium stores a computer program. When the computer program is executed by a computer, the method for sending the signaling packet in the coordinated manner in any one of the foregoing method embodiments is implemented.

An embodiment of this application further provides a computer program product. When the computer program product is executed by a computer, the method for sending the signaling packet in the coordinated manner in any one of the foregoing method embodiments is implemented.

All or some of the foregoing embodiments may be implemented by software, hardware, firmware, or any combination thereof. When software is used to implement embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid state disk (solid state disk, SSD)), or the like.

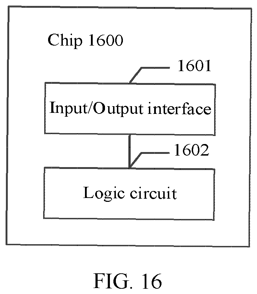

As shown in FIG. 16, an embodiment of this application further provides a chip 1600, including an input/output interface 1601 and a logic circuit 1602. The input/output interface 1601 is configured to receive/output code instructions or information. The logic circuit 1602 is configured to: execute the code instructions to perform the method for sending the signaling packet in the coordinated manner in any one of the foregoing method embodiments, or perform, based on the information, the method for sending the signaling packet in the coordinated manner in any one of the foregoing method embodiments.

The chip 1600 may implement functions shown by the processing unit and/or the transceiver unit in the foregoing embodiment.

A person of ordinary skill in the art may be aware that, in combination with the examples described in embodiments disclosed in this specification, units and algorithm steps can be implemented by electronic hardware, computer software, or a combination thereof. To clearly describe interchangeability between the hardware and the software, the foregoing has generally described compositions and steps of each example based on functions. Whether the functions are performed by hardware or software depends on a particular application and a design constraint condition of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed apparatus and method may be implemented in another manner.

## Claims

1. A method for sending a signaling packet in a coordinated manner, comprising:
sending, by a control node, a first indication message in a current periodicity, wherein the first indication message is used to coordinate a first network node and a second network node to send signaling packets, wherein
the coordination uses any one of the following manners: simultaneous sending, sending at a time interval less than a specified value, or sending at a time interval greater than a time interval required by a signaling packet sent earlier.

2. The method according to claim 1, wherein the method further comprises:
when the control node receives signal strength that is of the second network node and that is sent by the first network node, or receives signal strength that is of the first network node and that is sent by the second network node, determining, by the control node, that signal coverage areas of the first network node and the second network node overlap.

3. The method according to claim 2, wherein when the coordination is simultaneous sending or sending at the time interval less than the specified value, the method further comprises:
determining, by the control node, transmit power parameters of the first network node and the second network node in a next periodicity; and
comprising, by the control node, the transmit power parameters in a first indication message sent in the next periodicity, wherein
the transmit power parameters indicate transmit power used by the first network node and the second network node to send the signaling packets, and the transmit power parameters used in the next periodicity are not completely the same as transmit power parameters respectively used in a plurality of periodicities before the next periodicity.

4. The method according to claim 3, wherein
the transmit power of the first network node is original power, and the transmit power of the second network node is changed power, wherein the changed power comprises increased power or decreased power;
the transmit power of the first network node is changed power, and the transmit power of the second network node is original power; or
the transmit power of the first network node is original power, and the transmit power of the second network node is original power.

5. The method according to claim 2, wherein a manner of coordinating, in the current periodicity, the first network node and the second network node to send the signaling packets is not completely the same as manners respectively used in a plurality of periodicities before the current periodicity.

6. The method according to any one of claims 1 to 5, wherein the first indication message further comprises a sending mode indication parameter, and the sending mode indication parameter indicates the first network node and the second network node to send the signaling packets, or send the signaling packets based on a channel contention mechanism; and
a corresponding sending mode used by the first network node and the second network node to send the signaling packets in the current periodicity is not completely the same as corresponding sending modes respectively used to send the signaling packets in the plurality of periodicities before the current periodicity.

7. The method according to any one of claims 2 to 6, wherein when a quantity of network nodes comprised in wireless networking is greater than or equal to a preset quantity threshold, after the control node receives the signal strength that is of the second network node and that is sent by the first network node, or receives the signal strength that is of the first network node and that is sent by the second network node, the method further comprises:
when the control node determines that the signal strength that is of the second network node and that is sent by the first network node is greater than or equal to a preset signal strength threshold, or determines that the signal strength that is of the first network node and that is sent by the second network node is greater than or equal to a preset signal strength threshold, determining, by the control node, that the signal coverage areas of the first network node and the second network node overlap.

8. The method according to any one of claims 1 to 7, wherein the method further comprises:
sending, by the control node, a second indication message to the first network node and the second network node, wherein the second indication message indicates the first network node and the second network node to send enhanced packets to a connected terminal device, and the second indication message comprises one or a combination of the following information: a type of the enhanced packet, a quantity of enhanced packets, a sending time interval of the enhanced packet, or a sending rate of the enhanced packet, wherein
the enhanced packet is used by the connected terminal device to enhance signal strength of the received signaling packet.

9. The method according to claim 8, wherein the signaling packet is a broadcast signaling packet.

10. The method according to any one of claims 1 to 9, wherein if the control node sends the first indication message in a broadcast manner, the first indication message comprises: an identifier of the first network node, sending time that is of the signaling packet of the first network node and that is determined by the control node based on the coordination, an identifier of the second network node, and sending time that is of the signaling packet of the second network node and that is determined by the control node based on the coordination; or
if the control node sends the first indication message in a unicast manner, a first indication message sent by the control node to the first network node comprises: an identifier of the first network node and sending time that is of the signaling packet of the first network node and that is determined by the control node based on the coordination; and a first indication message sent by the control node to the second network node comprises: an identifier of the second network node and sending time that is of the signaling packet of the second network node and that is determined by the control node based on the coordination.

11. A method for sending a signaling packet in a coordinated manner, comprising:
receiving, by a first network node, a first indication message sent by a control node in a current periodicity, wherein the first indication message is used to coordinate the first network node and a second network node to send signaling packets; and
sending, by the first network node, the signaling packet based on the first indication message, wherein
the coordination uses any one of the following manners: simultaneous sending, sending at a time interval less than a specified value, or sending at a time interval greater than a time interval required by a signaling packet sent earlier.

12. The method according to claim 11, wherein the method further comprises:
obtaining, by the first network node through detection, signal strength of the second network node; and
sending, by the first network node, the signal strength of the second network node to the control node, to enable the control node to determine that signal coverage areas of the first network node and the second network node overlap.

13. The method according to claim 12, wherein when the coordination is simultaneous sending or sending at the time interval less than the specified value, the method further comprises:
determining, by the first network node from the first indication message, a carried transmit power parameter of the first network node, wherein the transmit power parameter indicates transmit power used by the first network node to send the signaling packet, and is not completely the same as transmit power parameters respectively used in a plurality of periodicities before the current periodicity; and
determining, by the first network node based on the transmit power parameter, the transmit power used for sending the signaling packet.

14. The method according to claim 13, wherein the determining, by the first network node based on the transmit power parameter, the transmit power used for sending the signaling packet comprises:
determining, by the first network node based on the transmit power parameter, that the transmit power is original power or changed power, wherein the changed power comprises increased power or decreased power.

15. The method according to any one of claims 11 to 14, wherein the first indication message further comprises a sending mode indication parameter, and the sending mode indication parameter indicates the first network node and the second network node to send the signaling packets, or send the signaling packets based on a channel contention mechanism; and
a corresponding sending mode used by the first network node and the second network node to send the signaling packets in the current periodicity is not completely the same as corresponding sending modes respectively used to send the signaling packets in the plurality of periodicities before the current periodicity.

16. The method according to any one of claims 11 to 15, wherein the method further comprises:
receiving, by the first network node, a second indication message sent by the control node, wherein the second indication message comprises one or a combination of the following information: a type of an enhanced packet, a quantity of enhanced packets, a sending time interval of the enhanced packet, or a sending rate of an enhanced packet, wherein the enhanced packet is used by a connected terminal device to enhance signal strength of the received signaling packet; and
sending, by the first network node, the enhanced packet to the connected terminal device based on the second indication message.

17. The method according to claim 16, wherein the sending, by the first network node, the enhanced packet to the connected terminal device based on the second indication message comprises:
detecting, by the first network node, the connected terminal and a sending status of the enhanced packet; and
sending, based on the second indication message, the enhanced packet to a connected terminal that meets a preset detection condition, wherein
the preset detection condition comprises one or a combination of the following conditions:
traffic of the connected terminal is less than or equal to a preset traffic threshold;
a quantity of sent enhanced packets in a current preset periodicity is less than or equal to a preset quantity threshold;
the connected terminal is in a non-dormant state;
the connected terminal has no energy-saving requirement; or
a quantity of queues for sending the enhanced packet is less than a queueable critical value.

18. The method according to claim 16, wherein the signaling packet is a broadcast signaling packet.

19. The method according to any one of claims 11 to 18, wherein when the first indication message is a broadcast message, the first indication message comprises: an identifier of the first network node, sending time that is of the signaling packet of the first network node and that is determined by the control node based on the coordination, an identifier of the second network node, and sending time that is of the signaling packet of the second network node and that is determined by the control node based on the coordination; or
when the first indication message is a unicast message, the first indication message comprises: an identifier of the first network node and sending time that is of the signaling packet of the first network node and that is determined by the control node based on the coordination.

20. A system for sending a signaling packet in a coordinated manner, wherein the system comprises a control node, a first network node, and a second network node, wherein
the control node sends a first indication message in a current periodicity, wherein the first indication message is used to coordinate the first network node and the second network node to send signaling packets;
the first network node receives the first indication message sent by the control node in the current periodicity, and sends the signaling packet based on the received first indication message; and
the second network node receives the first indication message sent by the control node in the current periodicity, and sends the signaling packet based on the received first indication message, wherein
the coordination uses any one of the following manners: simultaneous sending, sending at a time interval less than a specified value, or sending at a time interval greater than a time interval required by a signaling packet sent earlier.

21. An apparatus for sending a signaling packet in a coordinated manner, wherein the apparatus comprises a transceiver unit and a processing unit, wherein
the processing unit is configured to determine a manner of coordinating, in a current periodicity, a first network node and a second network node to send signaling packets; and
the transceiver unit is configured to send a first indication message in the current periodicity, wherein the first indication message is used to coordinate the first network node and the second network node to send the signaling packets, wherein
the coordination uses any one of the following manners: simultaneous sending, sending at a time interval less than a specified value, or sending at a time interval greater than a time interval required by a signaling packet sent earlier.

22. The apparatus according to claim 21, wherein
the transceiver unit is further configured to: receive signal strength that is of the second network node and that is sent by the first network node, or receive signal strength that is of the first network node and that is sent by the second network node; and
the processing unit is further configured to: when the signal strength that is of the second network node and that is sent by the first network node is received, or the signal strength that is of the first network node and that is sent by the second network node is received, determine that signal coverage areas of the first network node and the second network node overlap.

23. The apparatus according to claim 22, wherein when the coordination is simultaneous sending or sending at the time interval less than the specified value,
the processing unit is further configured to determine transmit power parameters of the first network node and the second network node in a next periodicity; and
the transceiver unit is further configured to comprise the transmit power parameters in a first indication message sent in the next periodicity, wherein
the transmit power parameters indicate transmit power used by the first network node and the second network node to send the signaling packets, and the transmit power used in the next periodicity is not completely the same as transmit power parameters respectively used in a plurality of periodicities before the next periodicity.

24. The apparatus according to claim 23, wherein when the processing unit is configured to determine the transmit power parameters of the first network node and the second network node in the next periodicity,
the processing unit is configured to select any one of the following determining manners:
the transmit power of the first network node is original power, and the transmit power of the second network node is changed power, wherein the changed power comprises increased power or decreased power;
the transmit power of the first network node is changed power, and the transmit power of the second network node is original power; or
the transmit power of the first network node is original power, and the transmit power of the second network node is original power.

25. An apparatus for sending a signaling packet in a coordinated manner, wherein the apparatus comprises a transceiver unit and a processing unit, wherein
the transceiver unit is configured to receive a first indication message sent by a control node in a current periodicity, wherein the first indication message is used to coordinate a first network node and a second network node to send signaling packets; and
the processing unit is configured to send the signaling packets based on the first indication message by using the transceiver unit, wherein
the coordination uses any one of the following manners: simultaneous sending, sending at a time interval less than a specified value, or sending at a time interval greater than a time interval required by a signaling packet sent earlier.
